(19) Europäisches Patentamt
European Patent Office
Office européen des brevets

(11) **EP 3 564 872 A1**

(12) **EUROPEAN PATENT APPLICATION**

(43) Date of publication:
**06.11.2019 Bulletin 2019/45**

(51) Int Cl.:
**G06N 10/00** *(2019.01)*

(21) Application number: **19166921.7**

(22) Date of filing: **02.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.05.2018 US 201815972117**

(71) Applicant: **INTEL Corporation**
**Santa Clara, CA 95054 (US)**

(72) Inventors:
• **MATSUURA, Anne**
  **Portland, OR Oregon 97209 (US)**
• **JOHRI, Sonika**
  **Portland, OR Oregon 97209 (US)**

(74) Representative: **HGF Limited**
**Fountain Precinct**
**Balm Green**
**Sheffield S1 2JA (GB)**

(54) **APPARATUS AND METHOD FOR ERROR REDUCTION USING SYMMETRY IN A QUANTUM COMPUTING SYSTEM**

(57) Apparatus and method for discarding non-symmetrical results in a quantum computing system. For example, one embodiment of the invention is an apparatus, comprising: a symmetry detector to analyze quantum program code to identify symmetries associated with one or more quantum gates indicated by the quantum program code, the quantum gates to be implemented by the quantum bits (qubits) of a quantum processor; and a symmetry-based filter to analyze result data generated by the quantum processor in view of the identified symmetries, the symmetry detector to identify and filter a first portion of the result data which is inconsistent with the identified symmetries.

*FIG. 2*

**Description**

**BACKGROUND**

**Field of the Invention**

The embodiments of the invention relate generally to the field of quantum computing. More particularly, these embodiments relate to an apparatus and method for error reduction using symmetry in a quantum computing system.

**Description of the Related Art**

Quantum computing refers to the field of research related to computation systems that use quantum mechanical phenomena to manipulate data. These quantum mechanical phenomena, such as superposition (in which a quantum variable can simultaneously exist in multiple different states) and entanglement (in which multiple quantum variables have related states irrespective of the distance between them in space or time), do not have analogs in the world of classical computing, and thus cannot be implemented with classical computing devices.

**BRIEF DESCRIPTION OF THE DRAWINGS**

A better understanding of the present invention can be obtained from the following detailed description in conjunction with the following drawings, in which:

**FIGS. 1A-1F** illustrate various views of an example quantum dot device, in accordance with one embodiment;

**FIG. 2** illustrates one embodiment of a quantum computing system using symmetry for identifying erroneous data;

**FIG. 3** illustrates a particular quantum circuit for the adiabatic evolution of two copies of the two-site Fermi Hubbard model;

**FIG. 4** illustrates a method in accordance with one embodiment of the invention; and

**FIG. 5A-D** illustrates results for a specific implementation and data points which post-selected in accordance with one embodiment of the invention.

**DETAILED DESCRIPTION**

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

INTRODUCTION

A quantum computer uses quantum-mechanical phenomena such as superposition and entanglement to perform computations. In contrast to digital computers which store data in one of two definite states (0 or 1), quantum computation uses quantum bits (qubits), which can be in superpositions of states. Qubits may be implemented using physically distinguishable quantum states of elementary particles such as electrons and photons. For example, the polarization of a photon may be used where the two states are vertical polarization and horizontal polarization. Similarly, the spin of an electron may have distinguishable states such as "up spin" and "down spin."

Qubit states are typically represented by the bracket notations $|0\rangle$ and $|1\rangle$. In a traditional computer system, a bit is exclusively in one state or the other, i.e., a '0' or a '1.' However, qubits in quantum mechanical systems can be in a superposition of both states at the same time, a trait that is unique and fundamental to quantum computing.

Quantum computing systems execute algorithms containing quantum logic operations performed on qubits. The sequence of operations is statically compiled into a schedule and the qubits are addressed using an indexing scheme. This algorithm is then executed a sufficiently large number of times until the confidence interval of the computed answer is above a threshold (e.g., ~95+%). Hitting the threshold means that the desired algorithmic result has been reached.

Qubits have been implemented using a variety of different technologies which are capable of manipulating and reading quantum states. These include, but are not limited to quantum dot devices (spin based and spatial based), trapped-ion devices, superconducting quantum computers, optical lattices, nuclear magnetic resonance computers, solid-state NMR Kane quantum devices, electrons-on-helium quantum computers, cavity quantum electrodynamics (CQED) devices, molecular magnet computers, and fullerene-based ESR quantum computers, to name a few. Thus, while a quantum dot device is described below in relation to certain embodiments of the invention, the underlying principles of the invention may be employed in combination with any type of quantum computer including, but not limited to, those listed above. The particular physical implementation used for qubits is orthogonal to the embodiments of the invention described herein.

QUANTUM DOT DEVICES

Quantum dots are small semiconductor particles, typically a few nanometers in size. Because of this small size, quantum dots operate according to the rules of quantum mechanics, having optical and electronic properties which differ from macroscopic entities. Quantum dots are sometimes referred to as "artificial atoms" to connote the fact that a quantum dot is a single object with discrete, bound electronic states, as is the case with atoms or molecules.

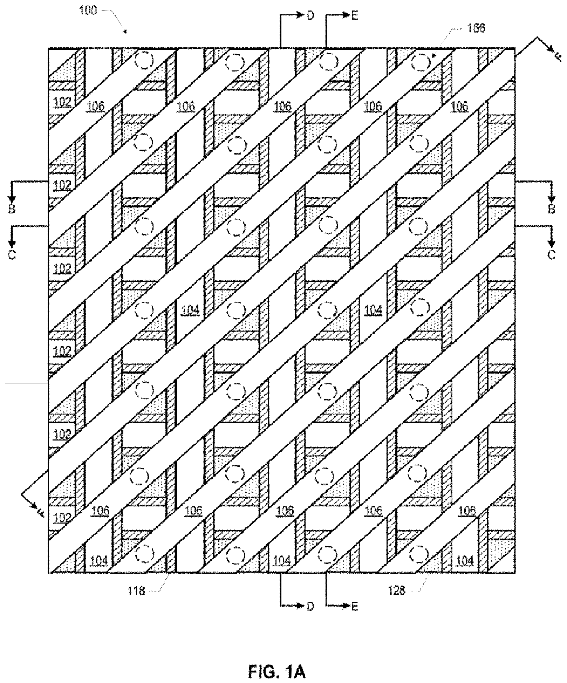

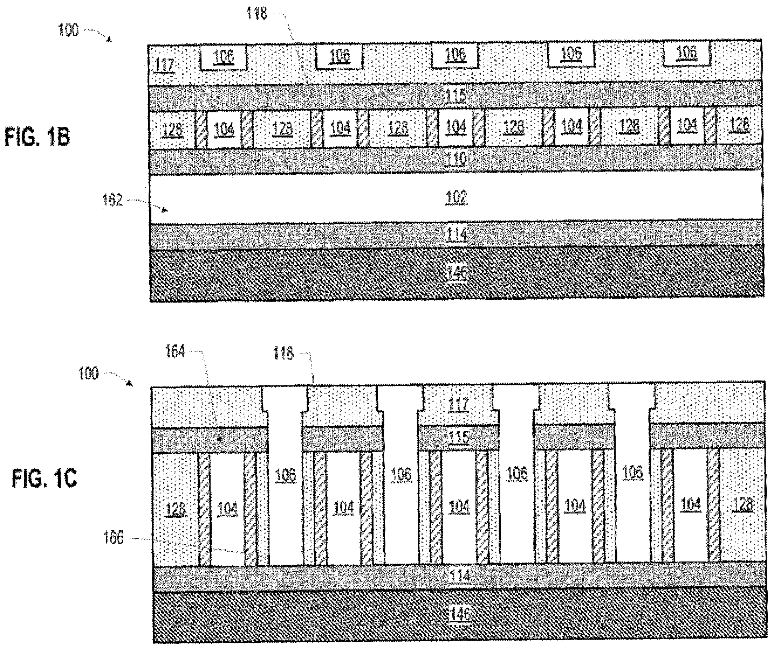

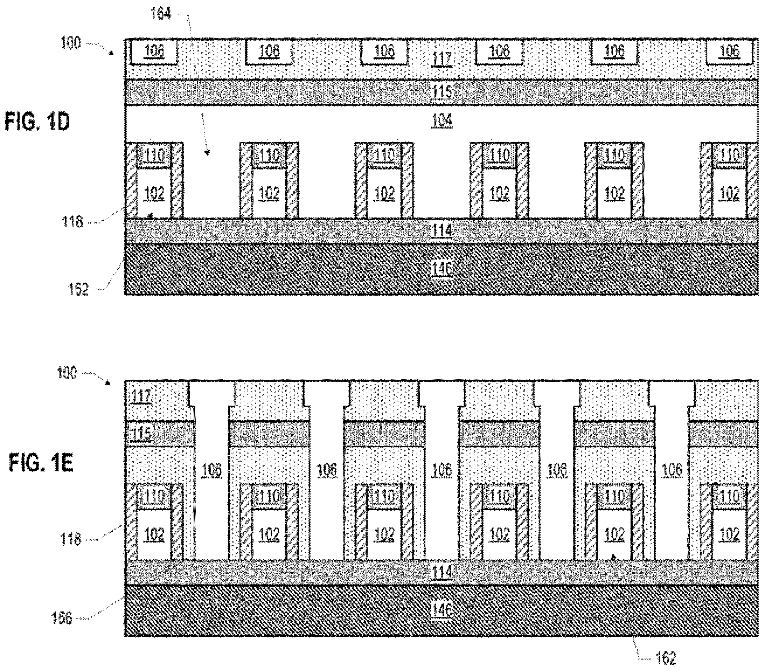

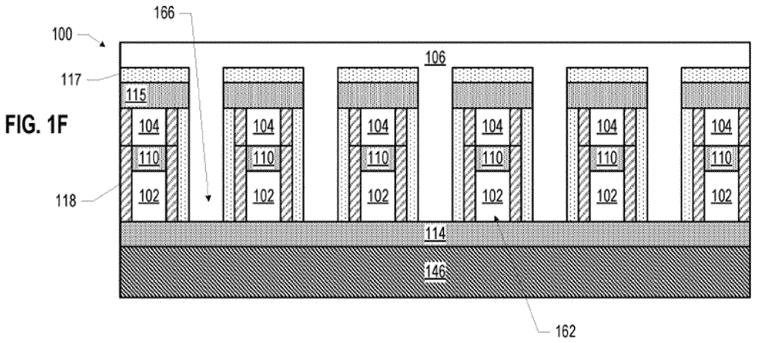

**Figures 1A-1F** are various views of a quantum dot device 100, which may be used with embodiments of the invention described below. **Figure 1A** is a top view of a portion of the quantum dot device 100 with some of the materials removed so that the first gate lines 102, the second gate lines 104, and the third gate lines 106 are visible. Although many of the drawings and description herein may refer to a particular set of lines or gates as "barrier" or "quantum dot" lines or gates, respectively, this is simply for ease of discussion, and in other embodiments, the role of "barrier" and "quantum dot" lines and gates may be switched (e.g., barrier gates may instead act as quantum dot gates, and vice versa). **Figures 1B-1F** are side cross-sectional views of the quantum dot device 100 of **Figure 1A**; in particular, **Figure 1B** is a view through the section B-B of **Figure 1A**, **Figure 1C** is a view through the section C-C of Figure 1A, **Figure 1D** is a view through the section D-D of **Figure 1A**, **Figure 1E** is a view through the section E-E of **Figure 1A**, and **Figure 1F** is a view through the section F-F of **Figure 1A**.

The quantum dot device 100 of **Figure 1** may be operated in any of a number of ways. For example, in some embodiments, electrical signals such as voltages, currents, radio frequency (RF), and/or microwave signals, may be provided to one or more first gate line 102, second gate line 104, and/or third gate line 106 to cause a quantum dot (e.g., an electron spin-based quantum dot or a hole spin-based quantum dot) to form in a quantum well stack 146 under a third gate 166 of a third gate line 106. Electrical signals provided to a third gate line 106 may control the electrical potential of a quantum well under the third gates 166 of that third gate line 106, while electrical signals provided to a first gate line 102 (and/or a second gate line 104) may control the potential energy barrier under the first gates 162 of that first gate line 102 (and/or the second gates 164 of that second gate line 104) between adjacent quantum wells. Quantum interactions between quantum dots in different quantum wells in the quantum well stack 146 (e.g., under different quantum dot gates) may be controlled in part by the potential energy barrier provided by the barrier potentials imposed between them (e.g., by intervening barrier gates).

Generally, the quantum dot devices 100 disclosed herein may further include a source of magnetic fields (not shown) that may be used to create an energy difference in the states of a quantum dot (e.g., the spin states of an electron spin-based quantum dot) that are normally degenerate, and the states of the quantum dots (e.g., the spin states) may be manipulated by applying electromagnetic energy to the gates lines to create quantum bits capable of computation. The source of magnetic fields may be one or more magnet lines, as discussed below. Thus, the quantum dot devices 100 disclosed herein may, through controlled application of electromagnetic energy, be able to manipulate the position, number, and quantum state (e.g., spin) of quantum dots in the quantum well stack 146.

In the quantum dot device 100 of **Figure 1**, a gate dielectric 114 may be disposed on a quantum well stack 146. A quantum well stack 146 may include at least one quantum well layer 152 (not shown in Figure 1) in which quantum dots may be localized during operation of the quantum dot device 100. The gate dielectric 114 may be any suitable material, such as a high-k material. Multiple parallel first gate lines 102 may be disposed on the gate dielectric 114, and spacer material 118 may be disposed on side faces of the first gate lines 102. In some embodiments, a patterned hardmask 110 may be disposed on the first gate lines 102 (with the pattern corresponding to the pattern of the first gate lines 102), and the spacer material 118 may extend up the sides of the hardmask 110, as shown. The first gate lines 102 may each be a first gate 162. Different ones of the first gate lines 102 may be electrically controlled in any desired combination (e.g., each first gate line 102 may be separately electrically controlled, or some or all the first gate lines 102 may be shorted together in one or more groups, as desired).

Multiple parallel second gate lines 104 may be disposed over and between the first gate lines 102. As illustrated in Figure 1, the second gate lines 104 may be arranged perpendicular to the first gate lines 102. The second gate lines 104 may extend over the hardmask 110, and may include second gates 164 that extend down toward the quantum well stack 146 and contact the gate dielectric 114 between adjacent ones of the first gate lines 102, as illustrated in **Figure**

**1D**. In some embodiments, the second gates 164 may fill the area between adjacent ones of the first gate lines 102/spacer material 118 structures; in other embodiments, an insulating material (not shown) may be present between the first gate lines 102/spacer material 118 structures and the proximate second gates 164. In some embodiments, spacer material 118 may be disposed on side faces of the second gate lines 104; in other embodiments, no spacer material 118 may be disposed on side faces of the second gate lines 104. In some embodiments, a hardmask 115 may be disposed above the second gate lines 104. Multiple ones of the second gates 164 of a second gate line 104 are electrically continuous (due to the shared conductive material of the second gate line 104 over the hardmask 110). Different ones of the second gate lines 104 may be electrically controlled in any desired combination (e.g., each second gate line 104 may be separately electrically controlled, or some or all the second gate lines 104 may be shorted together in one or more groups, as desired). Together, the first gate lines 102 and the second gate lines 104 may form a grid, as depicted in Figure 1.

Multiple parallel third gate lines 106 may be disposed over and between the first gate lines 102 and the second gate lines 104. As illustrated in Figure 1, the third gate lines 106 may be arranged diagonal to the first gate lines 102, and diagonal to the second gate lines 104. In particular, the third gate lines 106 may be arranged diagonally over the openings in the grid formed by the first gate lines 102 and the second gate lines 104. The third gate lines 106 may include third gates 166 that extend down to the gate dielectric 114 in the openings in the grid formed by the first gate lines 102 and the second gate lines 104; thus, each third gate 166 may be bordered by two different first gate lines 102 and two different second gate lines 104. In some embodiments, the third gates 166 may be bordered by insulating material 128; in other embodiments, the third gates 166 may fill the openings in the grid (e.g., contacting the spacer material 118 disposed on side faces of the adjacent first gate lines 102 and the second gate lines 104, not shown). Additional insulating material 117 may be disposed on and/or around the third gate lines 106. Multiple ones of the third gates 166 of a third gate line 106 are electrically continuous (due to the shared conductive material of the third gate line 106 over the first gate lines 102 and the second gate lines 104). Different ones of the third gate lines 106 may be electrically controlled in any desired combination (e.g., each third gate line 106 may be separately electrically controlled, or some or all the third gate lines 106 may be shorted together in one or more groups, as desired).

Although **Figures 1A-F** illustrate a particular number of first gate lines 102, second gate lines 104, and third gate lines 106, this is simply for illustrative purposes, and any number of first gate lines 102, second gate lines 104, and third gate lines 106 may be included in a quantum dot device 100. Other examples of arrangements of first gate lines 102, second gate lines 104, and third gate lines 106 are possible. Electrical interconnects (e.g., vias and conductive lines) may contact the first gate lines 102, second gate lines 104, and third gate lines 106 in any desired manner.

Not illustrated in Figure 1 are accumulation regions that may be electrically coupled to the quantum well layer of the quantum well stack 146 (e.g., laterally proximate to the quantum well layer). The accumulation regions may be spaced apart from the gate lines by a thin layer of an intervening dielectric material. The accumulation regions may be regions in which carriers accumulate (e.g., due to doping, or due to the presence of large electrodes that pull carriers into the quantum well layer), and may serve as reservoirs of carriers that can be selectively drawn into the areas of the quantum well layer under the third gates 166 (e.g., by controlling the voltages on the quantum dot gates, the first gates 162, and the second gates 164) to form carrier-based quantum dots (e.g., electron or hole quantum dots, including a single charge carrier, multiple charge carriers, or no charge carriers). In other embodiments, a quantum dot device 100 may not include lateral accumulation regions, but may instead include doped layers within the quantum well stack 146. These doped layers may provide the carriers to the quantum well layer. Any combination of accumulation regions (e.g., doped or non-doped) or doped layers in a quantum well stack 146 may be used in any of the embodiments of the quantum dot devices 100 disclosed herein.

APPARATUS AND METHOD FOR ERROR REDUCTION USING SYMMETRY IN A QUANTUM COMPUTING SYSTEM

Noise is a major limiting factor in quantum computing systems. Near-term quantum computers are limited by short quantum bit (qubit) decoherence times (generally fractions of seconds) and noisy qubit operations. One way to attempt to overcome this problem is to aim for a fully fault-tolerant quantum computer. However, this approach is excessively expensive in terms of the required number of physical to logical qubits. Most of the qubits in this scheme must be used for error correction rather than computation. Consequently, this approach is not suitable for near-term quantum computers, which will not have a sufficient number of qubits to compute anything interesting if the vast majority of qubits are needed for error correction.

The embodiments of the invention described herein perform post-selection error reduction techniques applied to the results of a quantum computation. Using the known symmetry of certain quantum operations, these embodiments mitigate the effect of noise after computation without the need for rigorous error correction.

The basic operations in quantum computing are performed by applying unitary operators to a quantum state. Each gate in a quantum circuit provides a unitary transformation on the affected qubits, just as each classical gate in a classical computation stands for a Boolean function. These quantum gate operations are the building blocks of a quantum circuit.

In one embodiment of the invention, symmetries associated with each unitary operator are identified and used to post-select experimental results and throw away those results that do not obey them. For example, given the known symmetry for a particular operation, certain states can be identified as impossible outcomes (unless they are errors); data associated with these states can then be discarded.

Fully fault-tolerant quantum computing may be very far away. In the meantime (e.g., the next 20 years), systems of less than 1000 qubits may still prove to be useful with error-mitigation techniques that reduce experimental error without full-blown rigorous error correction. Using the embodiments of the invention, the maximum computing power can be realized from imperfect qubit systems, even without reaching the fault-tolerance threshold. Consequently, the techniques described herein are critical to making at least the next several generations of quantum computers useful.

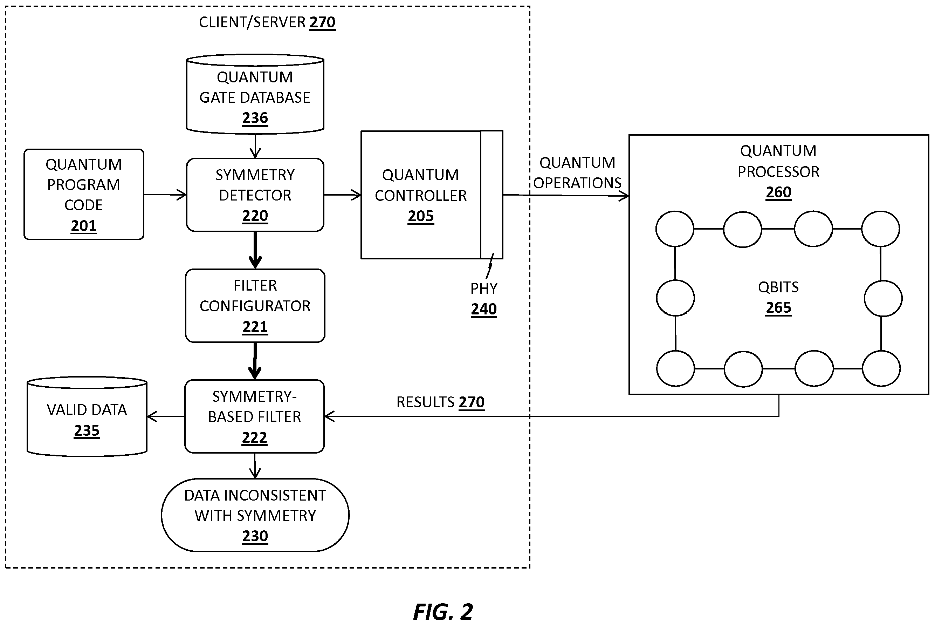

**Figure 2** illustrates one embodiment of a quantum computing architecture which performs post-selection of data based on symmetry. Qubits 265 of a quantum processor 260 are manipulated in response to signals from a quantum controller 205. Any type of qubits 265 may be used within the quantum processor 260 including, by way of example, and not limitation, trapped ion qubits and quantum dots. However, the embodiments of the invention may be implemented with any type of qubits.

In one embodiment, the quantum controller 205 executes commands included in compiled quantum program code 201 specifying a quantum runtime. The quantum program code 201 may be implemented in software executed on a general purpose processor (not shown) of a client/server device 270. One embodiment of the quantum runtime program code 201 specifies operations in accordance with the Open Quantum Assembly Language (QASM), an intermediate representation for quantum instructions. However, the underlying principles of the invention are not limited to any particular language.

The quantum controller 205 may include both a general purpose or special purpose processor to execute the quantum program code 201 and specialized circuitry to control the qubits. One or more physical layer (PHY) devices 240 coupled to or integral to the quantum controller perform the underlying operations on the qubits 265 as specified by the quantum runtime 201. For example, the physical layer devices 240 can include electromagnetic transmitters to generate microwave pulses or other electromagnetic signals to manipulate the qubits 265 in accordance with the quantum program code 201. In response, the quantum processor 260 performs the specified sequence of operations on the qubits 265 to generate results 270. In one implementation, multiple iterations of a particular operation or series of operations are required to generate the results 270.

Symmetry-based laws for quantum systems imply that the combined output of the quantum measurements on all the qubits should obey certain rules. One embodiment of the invention applies these rules to identify results which are inconsistent with the defined symmetry, which may then be discarded. For example, if the particle number is conserved, the total number of qubits measured to be in the '1' state at the end of the quantum computation is constant, even though any single qubit may be in an up or down state.

In one embodiment, a symmetry detector 220 analyzes the quantum program code 201 to identify these symmetries. For example, the symmetry detector 220 identifies particular quantum gate operations following which sets of qubits will obey a known symmetry. Different quantum gate/unitary operator symmetries may be compiled within a database 236 used by the symmetry detector 220 to detect such symmetries. In one specific embodiment, a controlled-swap (C-Swap) gate implemented in a 5-qubit quantum processor 260 is used to calculate Renyi entropy, and experimental errors are mitigated by exploiting the detected symmetric properties of the C-Swap gate.

A filter configurator 221 applies the symmetries identified by the symmetry detector 220 to dynamically configure or generate a symmetry-based filter 222 specifically tailored to evaluate results 270 in accordance with the symmetries identified in the quantum program code 201. For example, in an implementation which identifies symmetries in C-Swap gates, the symmetric relationship between qubits in the C-Swap gates may be applied to the symmetry-based filter 222.

The symmetry-based filter 222 analyzes the results 270 generated by the quantum processor 260 to identify those data points 230 which are inconsistent with this symmetric relationship. Data 230 which the symmetry-based filter 222 determines is inconsistent with the expected symmetry is discarded while data which is determined to be consistent 235 is stored in a storage device of the client/server 270. Consequently, using the known symmetry of certain unitary operators such as C-Swap gates, the effects of noise after computation is mitigated without the need for rigorous error correction.

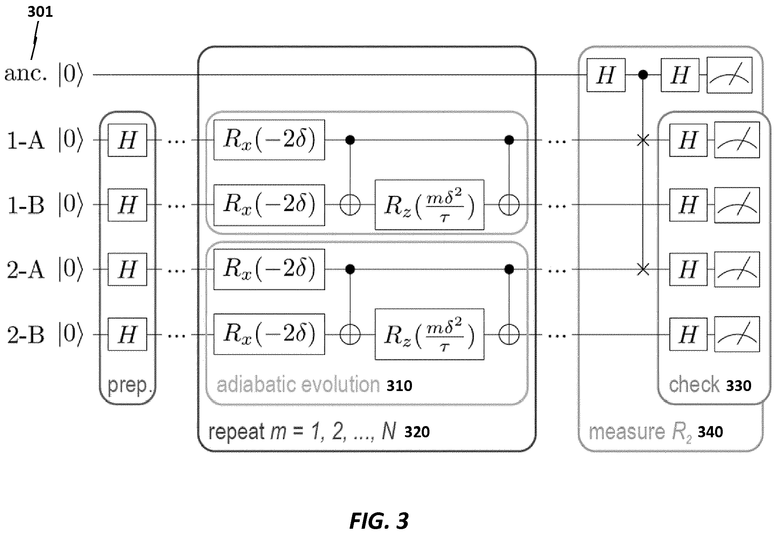

**Figure 3** illustrates a particular quantum circuit for the adiabatic evolution of two copies (labeled 1 and 2) of the two-site Fermi Hubbard model, each realized in two qubits A and B, and the measurement of the second Renyi entropy obtained from ancilla qubit 301. In particular, the data from the bottom four qubits can be used to determine whether a particular measurement of the ancilla qubit should be accepted or not. While the details are not shown in **Figure 2** to avoid obscuring the underlying principles of the invention, the symmetry-based post selection techniques described herein may be used in combination with existing error coding techniques.

Returning to **Figure 3**, the non-interacting ground state is prepared via the application of Hadamard gates, followed by the digitized adiabatic evolution 310 to a finite value of U by repeated application of the central code block 320. The value $m$ is an integer referring to the $m$-th step of the adiabatic evolution, $\delta$ is the step size and $T$ is the evolution time. The angles in the rotation gates are in radians. The Renyi entropy R2 is measured at 340 by applying a C-Swap gate controlled by the ancilla qubit 301 on subsystems A and subsequent detection of the state of the ancilla qubit 301. By applying additional Hadamard gates and measuring the system qubits, experimental errors can be detected and discarded, as indicated within the check region 330.

As one example, using the convention that the top-most qubit in the five-qubit output state after the circuit shown in **Figure 3** is the most significant bit in the binary representation of the computational basis, each state from |00000> to |11111> can be assigned a decimal value from 0 to 31 (i.e., representing all possible combinations of 5 bits). Given the symmetry associated with the state after the C-Swap gate implies that the states numbered 16, 17, 18, 20, 21, 23, 24, 26, 27, 29, 30, and 31 violate the symmetry. Consequently, the symmetry-based filter 222 will discard these states, thereby post-selecting the results by removing non-symmetric outcomes. In contrast, other states, such as |00000>, |00001>, and |00010> are valid states which are passed through by the symmetry-based filter.

A detailed description of the five qubit implementation shown in **Figure 3** are provided below (section entitled "Measuring Renyi Entropy of a two-site Fermi-Hubbard Model").

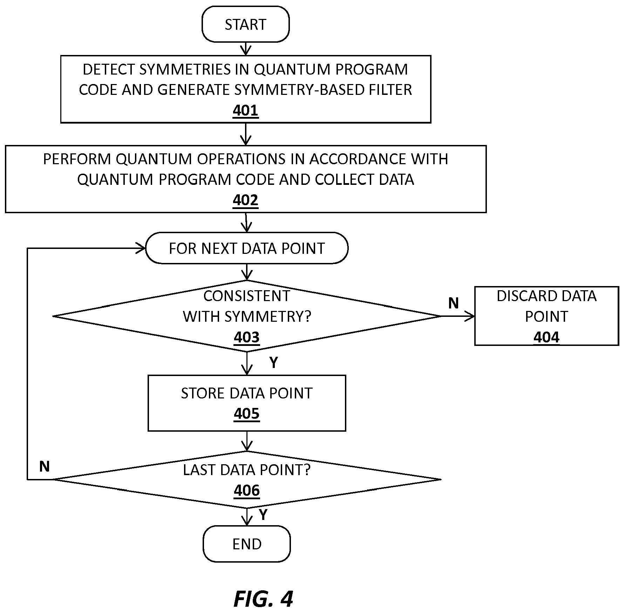

One embodiment of a method for filtering data in accordance with symmetries is illustrated in **Figure 4**. At 401, symmetries within specified quantum program code are identified and, with this information, a symmetry-based filter is generated. At 402, quantum operations are performed in accordance with the quantum program code. In particular, a quantum processor performs operations on prepared qubits to generate results. Multiple iterations of a particular operation or series of operations may be required to generate the results.

At 403, each data point is evaluated to determine whether it is consistent with the expected symmetry associated with its quantum gate. If not, then the data point is discarded at 404. If so, then the data point is stored at 405. When the last data point has been evaluated, determined at 406, the process ends.

The above error-mitigation techniques scale well to larger system sizes since the number of discarded states scales with the size of the Hilbert space of the system, but it will break down at larger circuit depths. Therefore it is a particularly beneficial technique for the NISQ (Noisy Intermediate-Scale Quantum) era, where short-depth circuits acting on several qubit systems without fault tolerance are expected to be useful for certain applications.

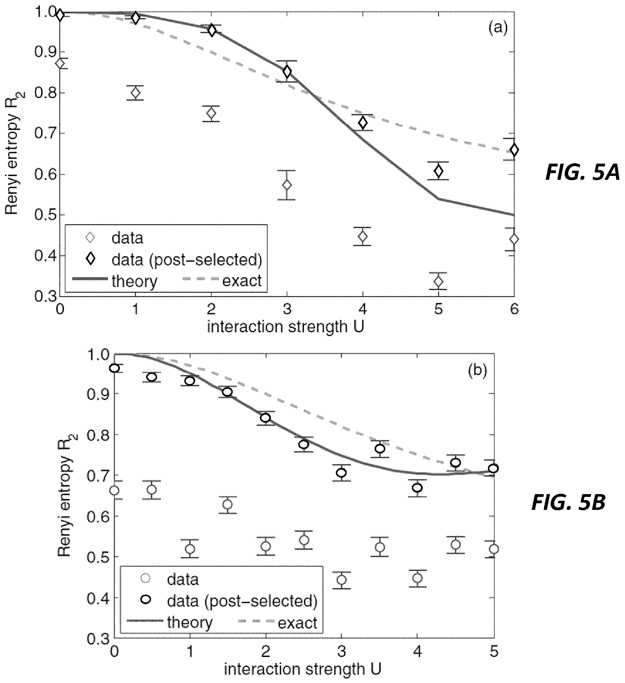

The data shown in **Figures 5A-B** illustrates the usefulness of the embodiments of the invention. In particular, the data in open circles shows the noisy results before using the symmetry-based data selection techniques. The filled black circles show the results after using a symmetry-based filter to remove inconsistent values (the open circles). The resulting data is therefore consistent with the theoretical predictions.

Measuring Renyi Entropy of a Two-site Fermi-Hubbard Model

As mentioned above, **Figure 3** shows a particular quantum circuit for the adiabatic evolution of two copies (labeled 1 and 2) of the two-site Fermi Hubbard model, each realized in two qubits A and B, and the measurement of the second Renyi entropy.

The efficient simulation of correlated quantum systems is the most promising near-term application of quantum computers. Described below is an implementation for a measurement of the second Renyi entropy of the ground state of the two-site Fermi-Hubbard model on a 5-qubit programmable quantum computer based on trapped ions. This disclosure illustrates the extraction of a non-linear characteristic of a quantum state using a controlled-swap gate acting on two copies of the state. This scalable measurement of entanglement on a universal quantum computer will, with more qubits, provide insights into many-body quantum systems that are impossible to simulate on classical computers.

One of the striking differences between classical and quantum systems is the phenomenon of entanglement. Analyzing large entangled states is of considerable interest for quantum computing applications. This is particularly relevant to quantum chemistry and materials science simulations involving interacting fermions [1, 2], small versions of which have been simulated on few-qubit quantum computers [3-5]. Recently, a quantum algorithm was developed to construct the entanglement spectrum of an arbitrary wave function prepared on a quantum computer via measurement of the Renyi entropies [6]. In the present description, the second Renyi entropy is measured in a 5-qubit circuit by implementing a controlled-swap (C-Swap) gate, and experimental errors are mitigated by exploiting the symmetry properties of this gate (as described generally above). Previous measurements of the Renyi entropy such as [7] were not implemented on universal machines and may not be easily generalizable to arbitrary Hamiltonians or scalable to larger systems.

For a many-body quantum system ideally described by the state $|\Psi\rangle$ and composed of two subsystems A and B, the nth Renyi entropy is given by $S_n = \frac{1}{1-n}\log(R_n),$ where

$$R_n = Tr\left(\hat{\rho}_A^n\right) \qquad\qquad (1)$$

is the trace of the nth power of the reduced density matrix $\hat{\rho}_A = Tr_B(|\Psi\rangle\langle\Psi|)$. For non-zero entanglement, $R_2 < 1$, which has the same universality properties as the von Neumann entropy $S = -Tr(\hat{\rho}_A log(\hat{\rho}_A))$. Both are measures of the entanglement between $A$ and $B$, and provide valuable information about the underlying physics of the system. For example, the Renyi entropy can be used to study out-of-equilibrium scaling of entanglement [8-13], which includes distinguishing many-body localized states from thermalized states [14-18] through their time dependence and dimensional scaling law [19], and to study topological order [20, 21] and quantum critical systems [22-24].

The system under investigation in the present case is the two-site Fermi-Hubbard model, which describes interacting electrons on a lattice [25, 26]. Despite its simplicity, it has been postulated as a model for complex phenomena such as high-temperature superconductivity. Since its behavior in the thermodynamic limit remains inaccessible to classical numerical techniques, it has become a prime candidate for simulation by quantum computers [27, 28].

Several co-designed techniques are employed. First, an efficient mapping from the electronic problem to the qubit space is determined. Second, a circuit is developed for digitized adiabatic evolution to prepare the ground state of the model, parametrized by the Trotter step size and the total evolution time. Based on available experimental resources and estimated Trotter errors, a set of parameters are chosen that best correspond to the result from exact diagonalization. The C-Swap gate is realized, which is the key to efficiently extracting the second Renyi entropy. Finally, all of these elements are integrated into one circuit (an embodiment shown in Figure 3) that prepares and evolves two copies of the Fermi-Hubbard system, and measures the second Renyi entropy with the help of an ancilla qubit. Importantly, in this step, the symmetry properties of the C-Swap gate are used to post-process the information contained in the four data qubits and reduce experimental errors. The results of this measurement for two sets of parameters are shown in **Figures 5A-B.** Other methods to measure entanglement entropy have been proposed using either multiple copies of the system [29-32], or random quenches [33].

In one embodiment, the relevant quantum circuits are implemented on a trapped-ion system, that constitutes a programmable five-qubit quantum computer with full connectivity [34, 35]. Qubits are realized in the hyperfine-split $^2S_{1/2}$ ground level of $^{171}$Yb+ ions confined in a Paul trap. Single- and two-qubit gate fidelities are typically 99.1(5)% and 98.5(5)%, respectively. Typical gate times are 10 $\mu$s for single- and 210 $\mu s$ for two-qubit gates. The computational gates such as H, CNOT, and C-Swap are generated in a modular fashion by a compiler which breaks them down into constituent physical-level single-and two-qubit gates.

The Fermi-Hubbard Hamiltonian is

$$\hat{H} = -J \sum_{\langle i,j\rangle,\sigma}\left(\hat{C}_{i,\sigma}^\dagger \hat{C}_{j,\sigma} + \hat{C}_{j,\sigma}^\dagger \hat{C}_{i,\sigma}\right) + U\sum_{i=l}^N \hat{n}_{i\uparrow}\hat{n}_{i\downarrow} \qquad (2)$$

where $\hat{C}_{i,\sigma}^\dagger$ and $\hat{C}_{i,\sigma}$ are the electron creation and annihilation operators, respectively, for spin state $\sigma \in \{\downarrow, \uparrow\}$ and site $i$, and $\hat{n}_{i,\sigma} = \hat{C}_{i,\sigma}^\dagger = \hat{C}_{i,\sigma}$ is the electron number operator. Here $J$ is the hopping strength and U is the onsite interaction. We consider the smallest non-trivial version of the model, which involves two sites and two electrons with total spin $Sz = 0$ along the $z$ - $axis$.

Typically, when mapping electronic problems to qubits, the Jordan-Wigner [36] or Bravyi-Kitaev [2] mappings are used, both of which work in the second quantized basis. Here, the number of qubits Nq is equal to the number of single-electron states $N_S$, which would require $Nq = Ns = 4$ qubits.

However, in many problems, there are additional symmetries or conservation laws that can reduce the size of the Hilbert space. The Hamiltonian above conserves both the number of electrons $N_e$ and the total spin along $z$, $S_z$. Therefore, a first quantization mapping, in which the Hilbert space sizes of the qubit system and the many-electron problem are equal, uses qubits most efficiently. This is an important optimization for near-term quantum hardware.

In first quantization, the Hilbert space size is 4, which can be mapped to two qubits as $|00\rangle = \{1_\uparrow 1_\downarrow\}$, $|01\rangle = \{1_\uparrow 2_\downarrow\}$, $|10\rangle = \{2_\uparrow 1_\downarrow\}$, $and$ $|11\rangle = \{2_\uparrow 2_\downarrow\}$. $\{i_{\sigma l}j_{\sigma l}\}$ represent the Slater determinants, which satisfy the number and spin conservation laws of the Hamiltonian. In this mapping, one qubit represents the up spin space and the other the down spin space. In this basis, the Hamiltonian is

$$\widehat{H} = \begin{bmatrix} U & -J & -J & 0 \\ -J & 0 & 0 & -J \\ -J & 0 & 0 & -J \\ 0 & -J & -J & U \end{bmatrix}. \qquad (3)$$

This can be written in terms of operators acting on the two qubits (up to a constant, and scaling energy by $J$) [37, 38]

$$\widehat{H} = -\left(\hat{X}_1 + \hat{X}_2\right) + \frac{U}{2}\hat{Z}_1\hat{Z}_2, \qquad (4)$$

Where $\hat{X}_1$ and $\hat{Z}_1$ are Pauli matrices.

To prepare the ground state of $\hat{H}$ at finite $U$, we use digitized adiabatic evolution from the zero-interaction ground state. The time-dependent Fermi-Hubbard Hamiltonian $\hat{H}(t)$ is

$$\hat{H}(t) = -\left(\hat{X}_1 + \hat{X}_2\right) + \frac{t}{2\tau}\hat{Z}_1\hat{Z}_2 \qquad (5)$$

from $t = 0$ to $t = U_T$ by linear interpolation. At $U = 0$, the ground state is $(|0\rangle + |1\rangle) \otimes (|0> + |1>)$, which can be prepared with Hadamard gates (see Fig. 1).

The first order Trotterization for a Hamiltonian with two non-commuting terms $\hat{H}_{a,b}$ is exp $(-i(\hat{H}_a + \hat{H}_b)\delta)$ = exp $(-i\hat{H}_a,\delta)$ $\exp\left(-i\hat{H}_b,\delta\right) + \hat{O}\left(\delta^2\right).$ For larger evolution Time $T$ and smaller step size _, the approximation of the ground state is more accurate (see Supplementary Material). Here, at time $t = m\delta$, where $m$ is an integer, we set $\hat{H}_a = -(\hat{X}_1 + \hat{X}_2),$ $\widehat{H}_b = \frac{m\delta}{2T}\hat{Z}_1\hat{Z}_2.$ Putting together Trotterization and digitized adiabatic evolution, we obtain the following sequence of unitary operations to prepare the ground state:

$$\hat{V} = \prod_{m=1}^{M}\left[exp\left(i\delta\hat{X}_1\right)exp\left(i\delta\hat{X}_2\right)\exp\left(-im\frac{\delta^2}{2T}\hat{Z}_1\hat{Z}_2\right)\right] \qquad (6)$$

Following [39], we use the convention that $\hat{R}_x(\theta) = exp(-i\theta\hat{X}/2)$, and similarly for $\hat{Z}$. This leads us to the circuit for the digitized adiabatic evolution as shown in figure 1.

The evolution on a classical computer is simulated to investigate the scaling of the error in $R_2$ in the first order Trotter approximation (see Supplementary Material). For the experimental implementation, the memory depth of the arbitrary waveform generator used to control the laser pulses limits the length of a gate sequence to 8 $ms$, bounding the number of Trotter steps to $Nsteps \le 6$. Two different methods are implemented for evolving to finite $U$.

Method I: For a fixed $T$ and $\delta$, one can sample at intervals of $T / \delta$ and $N_{steps} = UT / \delta$. In order to evolve from $U = 0$ to $U = 6$, we choose $T / \delta = 1$ and go from $N_{steps} = 0$ to $N_{steps} = 0$. As a result, only finitely-spaced values of $U$ can be chosen. Here, smaller values of $U$ involve fewer gates and will be less affected by experimental errors.

Method II: Fix $Nsteps = 5$, and hence sample any value of $U$ up to $Nsteps$. In this case, $T = Nsteps\ \delta/U.$ Here, the same number of gates are performed at every value of $U$ and so the magnitude of the experimental error should be similar at every point.

Based on simulations, the parameters are chosen that seem to most closely follow the results from exact diagonalization. For method $I$, $\delta = 0.1$ and $T = 0.1$, while for method $II$, $\delta = 0.25$ and $T = 1.25/U$.

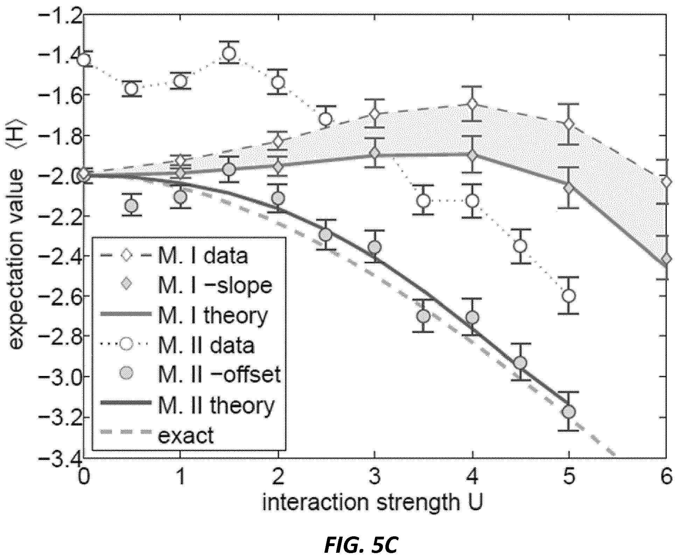

The digitized adiabatic evolution is implemented by itself for both methods in a two-qubit experiment on our system. The qubits are prepared along the *x - axis* of the Bloch sphere, in the ground state of the non-interacting Hamiltonian ($U = 0$) using Hadamard gates (see Fig. 3). Then the state is evolved in steps from $U = 0$ to $U = 6$ for method *I* and $U = 5$ for method *II*. Finally, measurements are taken along the *z - axis* and separately (with the help of additional Hadamard gates) along the *x - axis* to calculate the expectation value $\langle \hat{H} \rangle$ from $\langle \hat{X}_1 \rangle$, $\langle \hat{X}_2 \rangle$, and $\langle \hat{Z}_1 \hat{Z}_2 \rangle$. The results are shown in Figure 5C. Note that method *II* shows an offset from the ideal value. If the value measured for $U = 0$ is subtracted (no evolution) from all data points, they match the theoretical expectation closely. For method *I*, the number of gates and hence the error incurred grows with $U$. Subtracting a straight line of slope 0:063 models this increase well. This is consistent with the small-circuit error model developed in [40]. In a larger system, where the dynamics are unknown, this correction cannot be easily determined. The offset seen in method *II*, however, corresponds to the error in the eigenvalue of a non-interacting and hence easily integrable system, which can be more generally applied. Alternatively, zero-noise extrapolation as recently done in [41] can be employed, if the extra circuit depth needed is available.

To measure $R_2$, the technique outlined in [6] may be followed, which requires two copies of the state $|\Psi > = \sum_{i,j} c_{ij} |a_i\rangle$ *and* $|b_j\rangle$, where $|a_i\rangle$ and $|b_j\rangle$ are the basis states of subspace *A* and *B*, respectively. $R_2$ is given by the expectation value of the Swap operator on subspace *A*,

$$R_2 = \langle \Psi \mid \Psi' \mid Swap_A \mid \Psi \rangle \mid \Psi' \rangle, \quad (7)$$

where the apostrophe indicates states belonging to sub-system 2, and the operator $Swap_A$ acts as follows:

$$Swap_A \mid \Psi \mid \Psi' \rangle = \sum_{i,j} \sum_{i,j} C_{ij} C_{i'j'} \mid a_{i'} \rangle \mid b_i \rangle \mid a_i \rangle \mid b_{j'} \rangle . \quad (8)$$

To extract $R_2$ experimentally, the Swap-gate is applied to the subsystems A of two copies of the adiabatically evolved state, conditional on the state of an ancilla qubit. The ancilla qubit is prepared and measured in the x-basis by applying a Hadamard gate before and after the C-Swap gate (see Fig. 1). Repeating the simulation and measurement, and averaging the results allows us to determine the probability $P_a$ to and the ancilla qubit in state $|0\rangle$ or $|1\rangle$ from which $R_2$ is calculated as $R_2 = P_a(0) - P_a(1)$.

The C-Swap or Fredkin gate [42] has been experimentally implemented in NMR [43] and photonic systems [44, 45]. This embodiment of the invention is the first implementation of a C-Swap gate with trapped ions. Its evolution operator is:

$$\hat{U}_{\text{C-Swap}} = \begin{pmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \\ 0 & 0 & 0 & 0 & 1 & 0 & 0 & 0 \\ 0 & 0 & 0 & 0 & 0 & 0 & 1 & 0 \\ 0 & 0 & 0 & 0 & 0 & 1 & 0 & 0 \\ 0 & 0 & 0 & 0 & 0 & 0 & 0 & 1 \end{pmatrix} . \quad (9)$$

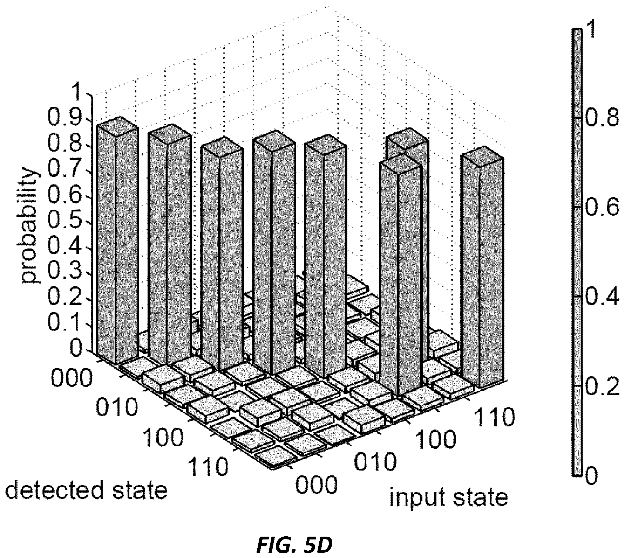

This gate is realized by programming the quantum compiler to break it down into gates from the native library [34, 35]. It requires seven entangling gates and fourteen single-qubit rotations. Each logical input state is applied and the output state probabilities recorded. The results are shown in **Figure 5D**. Compared to the ideal evolution operator shown in equation 9, the average success probability is 86.8(3)%. The control qubit, on which the measurement of $R_2$ hinges, is found to be in the correct state with 94.0(2)% probability. The gate is also applied on a balanced superposition of input states and 85.2(7)% correct outcomes measured. From these measurements, an estimate is derived for the process fidelity of 83(3)%, using the method described in [46].

With all elements of the circuit in place, the entire algorithm is implemented to adiabatically evolve two copies of the two-qubit Fermi-Hubbard system and measure the second Renyi entropy using the top qubit 301 as the ancilla (see Figure 3). The results are shown as open symbols for method I and II in Figure 5(a) and (b), respectively. Both Figures include a curve showing the theoretically expected values for the chosen Trotter step ($\delta$) and evolution time ($T$), as well as the exact solution for comparison. The exact solution shows $R_2$ monotonically decreasing with increasing interaction, implying increasing entanglement between the qubits. For method I the curve starts just below 0.9. At this point, no adiabatic evolution is applied, and this value is expected from the performance of the C-Swap gate. The deviation from the theoretically expected curve increases as more evolution steps are taken. For method II, 27 entangling gates have to be performed regardless of the value of U and we observe a systematically lowered value of $R_2$. It is clear that the measurement outcomes of the ancilla qubit are determined by both the dynamics of the model and the errors in the physical gates.

To distinguish between these two phenomena, the techniques described herein may be used to detect erroneous runs using the additional information available in the four data qubits representing the two systems. The eigenvalues of the Swap operator are $\pm 1$ with the corresponding eigen-states being even and odd functions of the qubits being swapped. For any operator $\hat{V}$, with eigenvalues $\lambda_m$ and eigenvectors $|m\rangle$ such that $\hat{V}|m\rangle = \lambda_m|m\rangle$, and a state $|\Phi\rangle = \sum_m d_m|m\rangle$, the expectation value $\langle\Phi|\hat{V}|\Phi\rangle$ h_j ^ V j_i can be obtained by applying $\hat{V}$ conditional on the state of an ancilla qubit. The ancilla is prepared along $x$ before the controlled-$\hat{V}$ operation and measured in the X-basis thereafter. Just before measurement, the qubits are in the following state, where the first ket in each term describes the ancilla qubit:

$$\langle|0\rangle \sum_m (1 + \lambda_m)d_m |m\rangle + |1\rangle \sum_m (1 + \lambda_m) d_m |m\rangle . \quad (10)$$

This is essentially the circuit used to measure the expectation value of the $Swap_A$ operator to determine the Renyi entropy. Therefore the observation can be made that the probability of $|1\rangle a_i\rangle|b_j\rangle |1\rangle a_{i'}\rangle|b_j\rangle$ is 0 if $i' = i$ or if $j' = j$. This implies that twelve of the 32 possible output states of the 5-qubit register should have zero-weight when it comes to evaluating $R_2$ (see Supplementary Material). The data is re-analyzed after discarding such outcomes and find the values given by the filled symbols in Figures 2a-b. The data points now follow the theoretical curves, showing that the method succeeds in substantially reducing experimental errors. This technique is general since it only depends on the symmetry of the C-Swap operation and is independent of the model Hamiltonian under investigation. The yield, or fraction of data runs that are kept under this method, is ~ 84% for method II, and drops with $U$ from 94% to 83% for method $I$ (see Supplementary Material). For the deeper circuits, the technique is not able to discard all errors, however, as can be seen in Figure 2(a) at $U = 6$.

In summary, the above-described implementation demonstrates a complete chain of steps (i.e. the 'full quantum computing stack') to simulate a model Hamiltonian on a quantum computer and measure bipartite entanglement. Each step is scalable to a larger system of qubits on the trapped-ion hardware platform. The technique can also be implemented on different quantum computing architectures. The error-mitigation is expected to scale well to larger system sizes since the number of states it discards scales with the size of the Hilbert space of the system, but it will break down at larger circuit depths. Therefore it is a good technique for the NISQ (Noisy Intermediate-Scale Quantum) era, where short-depth circuits may be expected to be acting on several qubit systems without fault tolerance to be useful for certain applications.

[1] A. Aspuru-Guzik, A. D. Dutoi, P. J. Love, and M. Head-Gordon, Science 309, 1704 (2005).

[2] S. B. Bravyi and A. Y. Kitaev, Annals of Physics 298, 210 (2002).

[3] P. J. J. O'Malley, R. Babbush, I. D. Kivlichan, J. Romero, J. R. McClean, R. Barends, J. Kelly, P. Roushan, A. Tranter, N. Ding, B. Campbell, Y. Chen, Z. Chen, B. Chiaro, A. Dunsworth, A. G. Fowler, E. Jeffrey, E. Lucero, A. Megrant, J. Y. Mutus, M. Neeley, C. Neill, C. Quintana, D. Sank, A. Vainsencher, J. Wenner, T. C. White, P. V. Coveney, P. J. Love, H. Neven, A. Aspuru-Guzik, and J. M. Martinis, Phys. Rev. X 6, 031007 (2016).

[4] L. Lamata, J. Kelly, L. Garc_a-_Alvarez, A. G. Fowler, A. Megrant, E. Je_rey, T. C. White, D. Sank, J. Y. Mutus, B. Campbell, Y. Chen, Z. Chen, B. Chiaro, A. Dunsworth, I.-C. Hoi, C. Neill, P. J. J. O'Malley, C. Quintana, P. Roushan, A. Vainsencher, J. Wenner, E. Solano, and J. M. Martinis, Nat. Comms. 6, 7654 EP (2015).

[5] A. Kandala, A. Mezzacapo, K. Temme, M. Takita, M. Brink, J. M. Chow, and J. M. Gambetta, Nature 549, 242 (2017).

[6] S. Johri, D. S. Steiger, and M. Troyer, Phys. Rev. B 96, 195136 (2017).

[7] R. Islam, R. Ma, P. M. Preiss, M. E. Tai, A. Lukin, M. Rispoli, and M. Greiner, Nature 528, 77 (2015).

[8] P. Calabrese and J. Cardy, J. Stat. Mech. 2005, P04010 (2005).

[9] G. D. Chiara, S. Montangero, P. Calabrese, and R. Fazio, J. Stat. Mech. 2006, P03001 (2006).

[10] I. Peschel and V. Eisler, J. Phys. A 42, 504003 (2009).

[11] M. Fagotti and P. Calabrese, Phys. Rev. A 78, 010306 (2008).

[12] V. Alba and P. Calabrese, Proceedings of the National Academy of Sciences (2017), 10.1073/pnas.1703516114.

[13] V. Alba and P. Calabrese, Phys. Rev. B 96, 115421 (2017).

[14] B. Bauer and C. Nayak, J. Stat. Mech. 2013, P09005 (2013).

[15] S. Iyer, V. Oganesyan, G. Refael, and D. A. Huse, Phys. Rev. B 87, 134202 (2013).

[16] J. H. Bardarson, F. Pollmann, and J. E. Moore, Phys. Rev. Lett. 109, 017202 (2012).

[17] R. Vosk and E. Altman, Phys. Rev. Lett. 110, 067204 (2013).

[18] C. K. Burrell and T. J. Osborne, Phys. Rev. Lett. 99, 167201 (2007).

[19] J. Eisert, M. Cramer, and M. B. Plenio, Rev. Mod. Phys. 82, 277 (2010).

[20] A. Kitaev and J. Preskill, Phys. Rev. Lett. 96, 110404 (2006).

[21] M. Levin and X.-G. Wen, Phys. Rev. Lett. 96, 110405 (2006).

[22] G. Vidal, J. I. Latorre, E. Rico, and A. Kitaev, Phys. Rev. Lett. 90, 227902 (2003).

[23] C. Holzhey, F. Larsen, and F. Wilczek, Nuclear Physics B 424, 443 (1994).

[24] P. Calabrese and J. Cardy, J. Stat. Mech. 2004, P06002 (2004).

[25] J. Hubbard, Proc. R. Soc. 276, 238 (1963).

[26] J. Hubbard, Proc. R. Soc. 277, 237 (1964).

[27] D. Wecker, M. B. Hastings, N. Wiebe, B. K. Clark, C. Nayak, and M. Troyer, Phys. Rev. A 92, 062318 (2015).

[28] D. Wecker, M. B. Hastings, and M. Troyer, Phys. Rev. A 92, 042303 (2015).

[29] D. A. Abanin and E. Demler, Phys. Rev. Lett. 109, 020504 (2012).

[30] A. J. Daley, H. Pichler, J. Schachenmayer, and P. Zoller, Phys. Rev. Lett. 109, 020505 (2012).

[31] A. M. Kaufman, M. E. Tai, A. Lukin, M. Rispoli, R. Schittko, P. M. Preiss, and M. Greiner, Science 353, 794 (2016), http://science.sciencemag.org/content/353/6301/794.full.pdf.

[32] H. Pichler, G. Zhu, A. Seif, P. Zoller, and M. Hafezi, Phys. Rev. X 6, 041033 (2016).

[33] A. Elben, B. Vermersch, M. Dalmonte, J. I. Cirac, and P. Zoller, Phys. Rev. Lett. 120, 050406 (2018).

[34] S. Debnath, N. M. Linke, C. Figgatt, K. A. Landsman, K. Wright, and C. Monroe, Nature 536, 63 (2016).

[35] N. M. Linke, D. Maslov, M. Roetteler, S. Debnath, C. Figgatt, K. A. Landsman, K. Wright, and C. Monroe, Proc. Natl. Acad. Sci. 114 (2016).

[36] P. Jordan and E. Wigner, Zeitschrift für Physik 47, 631 (1928).

[37] N. Moll, A. Fuhrer, P. Staar, and I. Tavernelli, Journal of Physics A: Mathematical and Theoretical 49, 295301 (2016).

[38] S. Bravyi, J. M. Gambetta, A. Mezzacapo, and K. Temme, arXiv:1701.08213 (2017).

[39] M. A. Nielsen and I. L. Chuang, Quantum Computation and Quantum Information: 10th Anniversary Edition, 10th ed. (Cambridge University Press, New York, NY, USA, 2011).

[40] Y. Li and S. C. Benjamin, Phys. Rev. X 7, 021050 (2017).

[41] E. F. Dumitrescu, A. J. McCaskey, G. Hagen, G. R. Jansen, T. D. Morris, T. Papenbrock, R. C. Pooser, D. J. Dean, and L. P, arXiv:1801.03897 (2018).

[42] E. Fredkin and T. To_oli, International Journal of Theoretical Physics 21, 219 (1982).

[43] J. Du, P. Zou, X. Peng, D. K. L. Oi, L. C. Kwek, C. H. Oh, and A. Ekert, Phys. Rev. A 74, 042319 (2006).

[44] R. B. Patel, J. Ho, F. Ferreyrol, T. C. Ralph, and G. J. Pryde, Science Advances 2 (2016), 10.1126/sciadv. 1501531.

[45] T. Ono, R. Okamoto, M. Tanida, H. F. Hofmann, and S. Takeuchi, Sciencti_c Reports 7 (2016), 10.1038/srep45353.

[46] D. M. Reich, G. Gualdi, and C. P. Koch, Phys. Rev. A 88, 042309 (2013).

[47] S. Olmschenk, K. C. Younge, D. L. Moehring, D. N. Matsukevich, P. Maunz, and C. Monroe, Phys. Rev. A 76, 052314 (2007).

[48] K. M_Imer and A. S_rensen, Phys. Rev. Lett. 82, 1835 (1999).

[49] E. Solano, R. L. de Matos Filho, and N. Zagury, Phys. Rev. A 59, R2539 (1999).

[50] G. Milburn, S. Schneider, and D. James, Fortschritte der Physik 48, 801 (2000).

[51] S.-L. Zhu, C. Monroe, and L.-M. Duan, Europhys Lett. 73, 485 (2006).

[52] T. Choi, S. Debnath, T. A. Manning, C. Figgatt, Z.-X. Gong, L.-M. Duan, and C. Monroe, Phys. Rev. Lett. 112, 190502 (2014).

EXAMPLES

The following are example implementations of different embodiments of the invention.

Example 1. An apparatus comprising: a symmetry detector to analyze quantum program code to identify symmetries associated with one or more quantum gates indicated by the quantum program code, the quantum gates to be implemented by the quantum bits (qubits) of a quantum processor to generate result data; and a symmetry-based filter to analyze the result data generated by the quantum processor in view of the identified symmetries, the symmetry detector to identify and filter a first portion of the result data which is inconsistent with the identified symmetries.

Example 2. The apparatus of Example 1 further comprising: a filter configurator to apply the symmetries identified by the symmetry detector to dynamically configure or generate the symmetry-based filter.

Example 3. The apparatus of Example 1 wherein the quantum program code comprises Open Quantum Assembly Language (QASM) code.

Example 4. The apparatus of Example 1 wherein the quantum processor comprises a trapped ion quantum processor in which each qubit is implemented as a state of an ion.

Example 5. The apparatus of Example 1 wherein the quantum processor comprises a quantum dot device in which each state comprises an electron spin orientation associated with a quantum dot.

Example 6. The apparatus of Example 1 wherein the quantum processor comprises a five qubit processor having four data qubits and one ancilla qubit.

Example 7. The apparatus of Example 1 wherein at least one of the quantum gates comprises a C-Swap gate and the symmetries are those known for C-Swap gates.

Example 8. The apparatus of Example 7 wherein the five qbits can represent a state from |00000> to |11111>, represented by decimal values 0 to 31, and wherein the symmetries associated with the C-Swap gate imply that the states corresponding to decimal numbers 16, 17, 18, 20, 21, 23, 24, 26, 27, 29, 30, and 31 are non-symmetric, wherein the first portion of the result data filtered by the symmetry-based filter includes data having one or more of these states.

Example 9. A method comprising: evaluating quantum program code to identify symmetries associated with one or more quantum gates indicated by the quantum program code executing the one or more quantum gates indicated by the quantum program code a quantum processor comprising a plurality of quantum bits (qubits) to generate result data; and analyzing the result data generated by the quantum processor in view of the identified symmetries to identify a first portion of the result data which is inconsistent with the identified symmetries.

Example 10. The method of Example 9 further comprising: filtering out the first portion of the result data to generate final result data, the final result data being consistent with the identified symmetries.

Example 11. The method of Example 9 wherein the quantum program code comprises Open Quantum Assembly Language (QASM) code.

Example 12. The method of Example 9 wherein the quantum processor comprises a trapped ion quantum processor in which each qubit is implemented as a state of an ion.

Example 13. The apparatus of Example 9 wherein the quantum processor comprises a quantum dot device in which each state comprises an electron spin orientation associated with a quantum dot.

Example 14. The method of Example 9 wherein the quantum processor comprises a five qbit processor.

Example 15. The method of Example 9 wherein at least one of the quantum gates comprises a C-Swap gate and the symmetries are those known for C-Swap gates.

Example 16. The method of Example 15 wherein the five qbits can represent a state from |00000> to |11111>, represented by decimal values 0 to 31, and wherein the symmetries associated with the C-Swap gate imply that the states corresponding to decimal numbers 16, 17, 18, 20, 21, 23, 24, 26, 27, 29, 30, and 31 are non-symmetric, wherein the first portion of the result data filtered by the symmetry-based filter includes data having one or more of these states.

Example 17. A machine-readable medium having program code stored thereon which, when executed by a machine, causes the machine to perform the operations of: evaluating quantum program code to identify symmetries associated with one or more quantum gates indicated by the quantum program code executing the one or more quantum gates indicated by the quantum program code a quantum processor comprising a plurality of quantum bits (qubits) to generate result data; and analyzing the result data generated by the quantum processor in view of the identified symmetries to identify a first portion of the result data which is inconsistent with the identified symmetries.

Example 18. The machine-readable medium of Example 17 further comprising program code to cause the operation of: filtering out the first portion of the result data to generate final result data, the final result data being consistent with the identified symmetries.

Example 19. The machine-readable medium of Example 17 wherein the quantum program code comprises Open Quantum Assembly Language (QASM) code.

Example 20. The machine-readable medium of Example 17 wherein the quantum processor comprises a trapped ion quantum processor in which each qubit is implemented as a state of an ion.

Example 21. The apparatus of Example 17 wherein the quantum processor comprises a quantum dot device in which each state comprises an electron spin orientation associated with a quantum dot.

Example 22. The machine-readable medium of cl Example aim 17 wherein the quantum processor comprises a five qbit processor.

Example 23. The machine-readable medium of Example 17 wherein at least one of the quantum gates comprises a C-Swap gate and the symmetries are those known for C-Swap gates.

Example 24. The machine-readable medium of Example 23 wherein the five qbits can represent a state from |00000> to |11111>, represented by decimal values 0 to 31, and wherein the symmetries associated with the C-Swap gate imply that the states corresponding to decimal numbers 16, 17, 18, 20, 21, 23, 24, 26, 27, 29, 30, and 31 are non-symmetric, wherein the first portion of the result data filtered by the symmetry-based filter includes data having one or more of these states.

In the above detailed description, reference is made to the accompanying drawings that form a part hereof, and in which is shown, by way of illustration, embodiments that may be practiced. It is to be understood that other embodiments may be utilized and structural or logical changes may be made without departing from the scope of the present disclosure. Therefore, the following detailed description is not to be taken in a limiting sense.

Given that fully fault-tolerant quantum computing may not be realized for many years, the embodiments of the invention may be used to provide the maximum computing power from imperfect qubit systems even without reaching the fault-tolerant threshold. Consequently, these embodiments will significantly improve the results generated by first and subsequent generations of quantum computers, making them more useful to customers.

Various operations may be described as multiple discrete actions or operations in turn in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed, and/or described operations may be omitted in additional embodiments. Terms like "first," "second," "third," etc. do not imply a particular ordering, unless otherwise specified.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). The term "between," when used with reference to measurement ranges, is inclusive of the ends of the measurement ranges. As used herein, the notation "A/B/C" means (A), (B), and/or (C).

The description uses the phrases "in an embodiment" or "in embodiments," which may each refer to one or more of the same or different embodiments. Furthermore, the terms "comprising," "including," "having," and the like, as used with respect to embodiments of the present disclosure, are synonymous.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

**Claims**

1. An apparatus comprising:

   a symmetry detector to analyze quantum program code to identify symmetries associated with one or more quantum gates indicated by the quantum program code, the quantum gates to be implemented by the quantum bits (qubits) of a quantum processor to generate result data; and
   a symmetry-based filter to analyze the result data generated by the quantum processor in view of the identified symmetries, the symmetry detector to identify and filter a first portion of the result data which is inconsistent with the identified symmetries.

2. The apparatus of claim 1 further comprising:
   a filter configurator to apply the symmetries identified by the symmetry detector to dynamically configure or generate the symmetry-based filter.

3. The apparatus of claim 1 wherein the quantum program code comprises Open Quantum Assembly Language (QASM) code.

4. The apparatus of claim 1 wherein the quantum processor comprises a trapped ion quantum processor in which each qubit is implemented as a state of an ion.

5. The apparatus of claim 1 wherein the quantum processor comprises a quantum dot device in which each state comprises an electron spin orientation associated with a quantum dot.

6. The apparatus of claim 1 wherein the quantum processor comprises a five qubit processor having four data qubits and one ancilla qubit.

7. The apparatus of claim 1 wherein at least one of the quantum gates comprises a C-Swap gate and the symmetries are those known for C-Swap gates.

8. The apparatus of claim 7 wherein the five qbits can represent a state from |00000> to 111111>, represented by decimal values 0 to 31, and wherein the symmetries associated with the C-Swap gate imply that the states corresponding to decimal numbers 16, 17, 18, 20, 21, 23, 24, 26, 27, 29, 30, and 31 are non-symmetric, wherein the first portion of the result data filtered by the symmetry-based filter includes data having one or more of these states.

9. The method of claim 8 wherein at least one of the quantum gates comprises a C-Swap gate and the symmetries are those known for C-Swap gates.

10. The method of claim 9 wherein the five qbits can represent a state from |00000> to |11111>, represented by decimal values 0 to 31, and wherein the symmetries associated with the C-Swap gate imply that the states corresponding to decimal numbers 16, 17, 18, 20, 21, 23, 24, 26, 27, 29, 30, and 31 are non-symmetric, wherein the first portion of the result data filtered by the symmetry-based filter includes data having one or more of these states.

11. A machine-readable medium having program code stored thereon which, when executed by a machine, causes the machine to perform the operations of:

    evaluating quantum program code to identify symmetries associated with one or more quantum gates indicated by the quantum program code
    executing the one or more quantum gates indicated by the quantum program code a quantum processor comprising a plurality of quantum bits (qubits) to generate result data; and
analyzing the result data generated by the quantum processor in view of the identified symmetries to identify a first portion of the result data which is inconsistent with the identified symmetries.

12. The machine-readable medium of claim 11 further comprising program code to cause the operation of:
filtering out the first portion of the result data to generate final result data, the final result data being consistent with the identified symmetries.

13. The machine-readable medium of claim 11 wherein the quantum program code comprises Open Quantum Assembly Language (QASM) code.

14. The machine-readable medium of claim 11 wherein the quantum processor comprises a trapped ion quantum processor in which each qubit is implemented as a state of an ion.

15. The apparatus of claim 11 wherein the quantum processor comprises a quantum dot device in which each state comprises an electron spin orientation associated with a quantum dot.

16. The machine-readable medium of claim 11 wherein the quantum processor comprises a five qbit processor.

17. The machine-readable medium of claim 11 wherein at least one of the quantum gates comprises a C-Swap gate and the symmetries are those known for C-Swap gates.

**FIG. 1A**

FIG. 1B

FIG. 1C

FIG. 1D

164

100

106 106 106 117 106 106 106

115

104

110 110 110 110 110 110

118

102 102 102 102 102 102

114

162

146

FIG. 1E

100

117

115

106 106 106 106 106

110 110 110 110 110

118

102 102 102 102 102 102

114

166

146

162

**FIG. 1F**

*FIG. 2*

FIG. 3

START

DETECT SYMMETRIES IN QUANTUM PROGRAM
CODE AND GENERATE SYMMETRY-BASED FILTER
**401**

PERFORM QUANTUM OPERATIONS IN ACCORDANCE WITH
QUANTUM PROGRAM CODE AND COLLECT DATA
**402**

FOR NEXT DATA POINT

CONSISTENT
WITH SYMMETRY?
**403**

**N** → DISCARD DATA
POINT
**404**

**Y**

STORE DATA POINT
**405**

**N** LAST DATA POINT?
**406**

**Y**

END

*FIG. 4*

EP 3 564 872 A1

FIG. 5A

FIG. 5B

FIG. 5C

FIG. 5D

Europäisches
Patentamt

European
Patent Office

Office européen
des brevets

**EUROPEAN SEARCH REPORT**

Application Number

EP 19 16 6921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NORBERT M LINKE ET AL: "Measuring the Renyi entropy of a two-site Fermi-Hubbard model on a trapped ion quantum computer", ARXIV.ORG, CORNELL UNIVERSITY LIBRARY, 201 OLIN LIBRARY CORNELL UNIVERSITY ITHACA, NY 14853, 22 December 2017 (2017-12-22), XP081405111, DOI: 10.1103/PHYSREVA.98.052334 * abstract; figures 1-4 * * page 1, left-hand column, line 1 - page 4, right-hand column, last line * * page 6, left-hand column, line 1 - page 8, right-hand column, last line * | 1-17 | INV. G06N10/00 |
| A | HATEM BARGHATHI ET AL: "Renyi generalization of the operational entanglement entropy", ARXIV.ORG, CORNELL UNIVERSITY LIBRARY, 201 OLIN LIBRARY CORNELL UNIVERSITY ITHACA, NY 14853, 3 April 2018 (2018-04-03), XP080867292, * abstract; figures 1-3 * * page 1, left-hand column, line 1 - page 5, left-hand column, last line * | 1-17 | TECHNICAL FIELDS SEARCHED (IPC) G06N |
| A | SONIKA JOHRI ET AL: "Entanglement spectroscopy on a quantum computer", ARXIV.ORG, CORNELL UNIVERSITY LIBRARY, 201 OLIN LIBRARY CORNELL UNIVERSITY ITHACA, NY 14853, 20 October 2017 (2017-10-20), XP081294610, DOI: 10.1103/PHYSREVB.96.195136 * abstract; figures 1-3 * * page 1, left-hand column, line 1 - page 7, right-hand column, last line * | 1-17 | |

-/--

The present search report has been drawn up for all claims

| Place of search | Date of completion of the search | Examiner |
|---|---|---|
| The Hague | 19 September 2019 | Totir, Felix |

EPO FORM 1503 03.82 (P04C01)

page 1 of 2

Europäisches
Patentamt

European
Patent Office

Office européen
des brevets

## EUROPEAN SEARCH REPORT

Application Number

EP 19 16 6921

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | BONET-MONROIG X ET AL: "Low-cost error mitigation by symmetry verification", ARXIV.ORG, CORNELL UNIVERSITY LIBRARY, 201 OLIN LIBRARY CORNELL UNIVERSITY ITHACA, NY 14853, 26 July 2018 (2018-07-26), XP080998593, * abstract; figures 1-5 * * page 1, left-hand column, line 1 - page 10, right-hand column, last line * | 1-17 | |
| X,P | YIGIT SUBASI ET AL: "Entanglement spectroscopy with a depth-two quantum circuit", ARXIV.ORG, CORNELL UNIVERSITY LIBRARY, 201 OLIN LIBRARY CORNELL UNIVERSITY ITHACA, NY 14853, 22 June 2018 (2018-06-22), XP081015601, DOI: 10.1088/1751-8121/AAF54D * abstract; figures 1-4 * * page 1, left-hand column, line 1 - page 6, left-hand column, line 20 * | 1-17 | TECHNICAL FIELDS SEARCHED (IPC) |
| A | CN 103 580 793 A (GIGADEVICE SEMICONDUCTOR INC) 12 February 2014 (2014-02-12) * abstract; figures 1-4 * * paragraph [0001] - paragraph [0013] * * paragraph [0019] - last paragraph * | 1-17 | |

The present search report has been drawn up for all claims

| Place of search | Date of completion of the search | Examiner |
|---|---|---|
| The Hague | 19 September 2019 | Totir, Felix |

EPO FORM 1503 03.82 (P04C01)

## ANNEX TO THE EUROPEAN SEARCH REPORT
## ON EUROPEAN PATENT APPLICATION NO.

EP 19 16 6921

19-09-2019

| Patent document cited in search report | Publication date | Patent family member(s) | Publication date |
|---|---|---|---|
| CN 103580793 A | 12-02-2014 | NONE | |

EPO FORM P0459

## EP 3 564 872 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A. ASPURU-GUZIK ; A. D. DUTOI ; P. J. LOVE ; M. HEAD-GORDON. *Science,* 2005, vol. 309, 1704
- S. B. BRAVYI ; A. Y. KITAEV. *Annals of Physics,* 2002, vol. 298, 210
- P. J. J. O'MALLEY ; R. BABBUSH ; I. D. KIVLICHAN ; J. ROMERO ; J. R. MCCLEAN ; R. BARENDS ; J. KELLY ; P. ROUSHAN ; A. TRANTER ; N. DING. *Phys. Rev.,* 2016, vol. X 6, 031007
- L. LAMATA ; J. KELLY ; L. GARC_A-_ALVAREZ ; A. G. FOWLER ; A. MEGRANT ; E. JE_REY ; T. C. WHITE ; D. SANK ; J. Y. MUTUS ; B. CAMPBELL. *Nat. Comms.,* 2015, vol. 6, 7654
- A. KANDALA ; A. MEZZACAPO ; K. TEMME ; M. TAKITA ; M. BRINK ; J. M. CHOW ; J. M. GAMBET-TA. *Nature,* 2017, vol. 549, 242
- S. JOHRI ; D. S. STEIGER ; M. TROYER. *Phys. Rev. B,* 2017, vol. 96, 195136
- R. ISLAM ; R. MA ; P. M. PREISS ; M. E. TAI ; A. LUKIN ; M. RISPOLI ; M. GREINER. *Nature,* 2015, vol. 528, 77
- P. CALABRESE ; J. CARDY. *J. Stat. Mech. 2005,* 2005, vol. P04010
- G. D. CHIARA ; S. MONTANGERO ; P. CALABRESE ; R. FAZIO. *J. Stat. Mech. 2006,* 2006, 03001
- I. PESCHEL ; V. EISLER. *J. Phys.,* 2009, vol. A 42, 504003
- M. FAGOTTI ; P. CALABRESE. *Phys. Rev.,* 2008, vol. A 78, 010306
- V. ALBA ; P. CALABRESE. *Proceedings of the National Academy of Sciences,* 2017
- V. ALBA ; P. CALABRESE. *Phys. Rev. B,* 2017, vol. 96, 115421
- B. BAUER ; C. NAYAK. *J. Stat. Mech,* 2013, 09005
- S. IYER ; V. OGANESYAN ; G. REFAEL ; D. A. HUSE. *Phys. Rev. B,* 2013, vol. 87, 134202
- J. H. BARDARSON ; F. POLLMANN ; J. E. MOORE. *Phys. Rev. Lett.,* 2012, vol. 109, 017202
- R. VOSK ; E. ALTMAN. *Phys. Rev. Lett.,* 2013, vol. 110, 067204
- C. K. BURRELL ; T. J. OSBORNE. *Phys. Rev. Lett.,* 2007, vol. 99, 167201
- J. EISERT ; M. CRAMER ; M. B. PLENIO. *Rev. Mod. Phys.,* 2010, vol. 82, 277
- A. KITAEV ; J. PRESKILL. *Phys. Rev. Lett.,* 2006, vol. 96, 110404

- M. LEVIN ; X.-G. WEN. *Phys. Rev. Lett.,* 2006, vol. 96, 110405
- G. VIDAL ; J. I. LATORRE ; E. RICO ; A. KITAEV. *Phys. Rev. Lett.,* 2003, vol. 90, 227902
- C. HOLZHEY ; F. LARSEN ; F. WILCZEK. *Nuclear Physics B,* 1994, vol. 424, 443
- P. CALABRESE ; J. CARDY. *J. Stat. Mech.,* 2004, 06002
- J. HUBBARD. *Proc. R. Soc.,* 1963, vol. 276, 238
- J. HUBBARD. *Proc. R. Soc.,* 1964, vol. 277, 237
- D. WECKER ; M. B. HASTINGS ; N. WIEBE ; B. K. CLARK ; C. NAYAK ; M. TROYER. *Phys. Rev.,* 2015, vol. A 92, 062318
- D. WECKER ; M. B. HASTINGS ; M. TROYER. *Phys. Rev.,* 2015, vol. A 92, 042303
- D. A. ABANIN ; E. DEMLER. *Phys. Rev. Lett.,* 2012, vol. 109, 020504
- A. J. DALEY ; H. PICHLER ; J. SCHACHENMAYER ; P. ZOLLER. *Phys. Rev. Lett.,* 2012, vol. 109, 020505
- A. M. KAUFMAN ; M. E. TAI ; A. LUKIN ; M. RISPOLI ; R. SCHITTKO ; P. M. PREISS ; M. GREINER. *Science,* 2016, vol. 353, 794, http://science.sciencemag.org/content/353/6301/794.full.pdf
- H. PICHLER ; G. ZHU ; A. SEIF ; P. ZOLLER ; M. HAFEZI. *Phys. Rev.,* 2016, vol. X 6, 041033
- A. ELBEN ; B. VERMERSCH ; M. DALMONTE ; J. I. CIRAC ; P. ZOLLER. *Phys. Rev. Lett.,* 2018, vol. 120, 050406
- S. DEBNATH ; N. M. LINKE ; C. FIGGATT ; K. A. LANDSMAN ; K. WRIGHT ; C. MONROE. *Nature,* 2016, vol. 536, 63
- N. M. LINKE ; D. MASLOV ; M. ROETTELER ; S. DEBNATH ; C. FIGGATT ; K. A. LANDSMAN ; K. WRIGHT ; C. MONROE. *Proc. Natl. Acad. Sci.,* 2016, 114
- P. JORDAN ; E. WIGNER. *Zeitschrift für Physik,* 1928, vol. 47, 631
- N. MOLL ; A. FUHRER ; P. STAAR ; I. TAVERNEL-LI. *Journal of Physics A: Mathematical and Theoretical,* 2016, vol. 49, 295301
- M. A. NIELSEN ; I. L. CHUANG. Quantum Computation and Quantum Information. University Press, 2011
- Y. LI ; S. C. BENJAMIN. *Phys. Rev.,* 2017, vol. X 7, 021050

- **E. FREDKIN ; T. TO_OLI.** *International Journal of Theoretical Physics,* 1982, vol. 21, 219
- **J. DU ; P. ZOU ; X. PENG ; D. K. L. OI ; L. C. KWEK ; C. H. OH ; A. EKERT.** *Phys. Rev.,* 2006, vol. A 74, 042319
- **R. B. PATEL ; J. HO ; F. FERREYROL ; T. C. RALPH ; G. J. PRYDE.** *Science Advances,* 2016, vol. 2
- **T. ONO ; R. OKAMOTO ; M. TANIDA ; H. F. HOFMANN ; S. TAKEUCHI.** *Sciencti_c Reports,* 2016, vol. 7
- **D. M. REICH ; G. GUALDI ; C. P. KOCH.** *Phys. Rev.,* 2013, vol. A 88, 042309
- **S. OLMSCHENK ; K. C. YOUNGE ; D. L. MOEHRING ; D. N. MATSUKEVICH ; P. MAUNZ ; C. MONROE.** *Phys. Rev.,* 2007, vol. A 76, 052314
- **K. M_IMER ; A. S_RENSEN.** *Phys. Rev. Lett.,* 1999, vol. 82, 1835
- **E. SOLANO ; R. L. DE MATOS FILHO ; N. ZAGU-RY.** *Phys. Rev.,* 1999, vol. A 59, R2539
- **G. MILBURN ; S. SCHNEIDER ; D. JAMES.** *Fortschritte der Physik,* 2000, vol. 48, 801
- **S.-L. ZHU ; C. MONROE ; L.-M. DUAN.** *Europhys Lett.,* 2006, vol. 73, 485
- **T. CHOI ; S. DEBNATH ; T. A. MANNING ; C. FIGGATT ; Z.-X. GONG ; L.-M. DUAN ; C. MONROE.** *Phys. Rev. Lett.,* 2014, vol. 112, 190502